# EUROPEAN PATENT SPECIFICATION

(11) **EP 2 493 590 B1**
(45) Date of publication and mention of the grant of the patent: **14.08.2019**
(21) Application number: 10827241.0
(22) Date of filing: 26.10.2010
(51) Int. Cl.: B01D 41/04, F01N 3/023

(54) **METHOD AND SYSTEM FOR CLEANING OF PARTICLE FILTERS**
VERFAHREN UND SYSTEM ZUR REINIGUNG VON PARTIKELFILTERN
PROCÉDÉ DE NETTOYAGE DE FILTRES À PARTICULES ET SYSTÈME

(30) Priority: 26.10.2009 SE 0950796
(43) Date of publication of application: 05.09.2012
(73) Proprietor: Stockforsa Invest AB, 217 74 Malmö (SE)
(72) Inventor: HÅKANSSON, Mikael, S-237 35 Bjärred (SE)
(74) Representative: Ehrner & Delmar Patentbyrå AB
(86) International application number: PCT/SE2010/051158
(87) International publication number: WO 2011/053233

(56) References cited:
- EP-A1- 1 060 780
- EP-A1- 1 861 190
- WO-A1-2008/091218
- WO-A1-2008/091218
- US-A1- 2004 020 193
- US-A1- 2004 045 439
- US-A1- 2004 103 788
- US-A1- 2004 103 788

## Description

### TECHNICAL AREA

The present invention relates to a method for cleaning particle filters and in particular a method whereby it is assured that soot and other particles are removed in a safe way.

### BACKGROUND OF INVENTION

There is an increased demand on the environmental aspects regarding pollutions in order to decrease the negative effects and thus the amount of pollutions. A source of pollutions in the environment is the exhausts from combustion engines such as cars, lorries busses and the like.

The exhausts have been less damaging during the last two decades due to more advance emission controls and catalysts. Also diesel engines have become cleaner due to catalysts. During recent years many diesel engines have been equipped with particle filters in order to further reduce the amount of pollutions in the exhausts. Particle filters are very effective in collecting particles and many vehicles have a certain cleaning procedure at certain driving distance intervals, whereby the filter is heated in order to reduce the collected particles. However, even if some of the particles are burnt away during this procedure, it is not so effective such as to completely clean the filters and thus the filter has to be replaced after a certain driving distance. The replacement of the filter is rather costly for the owner of the vehicle and the filter should be able to be used further if it is cleaned because the material of the fitter, stainless steel and ceramics, have not deteriorated during use, if the filter has not been exposed to physical damage and thus the filter could be reconditioned. This in turn could mean cheaper spare parts for the owners and reduced use of material resources.

The applicant for the present invention has developed a method for cleaning particle filters by burning off soot and other particles in the filter, which method is described in the document WO2008/091218. The disclosed method has shown to be very effective in cleaning many clogged particle filter. In some instances the described method does not provide a complete cleaning for different reasons, whereby it may be needed further measures in order to obtain a complete result.

US 2004/045439 discloses a method for cleaning filters having a first step where the filter is connected with its downstream face to a heater, which generates hot air that passes through the filter, causing soot in the filter to burn. In a next step the downstream face is connected to a cleaning fluid means that can flow hot cleaning liquid through the filter or alternatively a stream of air. The alternating steps of adding liquid and air are repeated in a number of cycles.

US 2004/103788 discloses a method of cleaning particle filters in which a flexible duct is connected to a source of high pressure fluid (air OR cleaning fluid). The fluid is blown into the downstream end of the particle filter via and arm having a nozzle. As an option, hot air may be blown through the filter for oxidizing soot before the use of high pressure fluid. The filter can be rotated during the cleaning with the jet of liquid from the nozzle. Alternatively a translation in the x-y-direction may be performed or a rotating arm can be used.

### BRIEF DESCRIPTION OF INVENTION

The aim of the present invention is to provide a method which gives a very good cleaning result.

This aim is obtained with a method comprising the features of the independent claim 1. Preferable embodiments of the invention form the subject of the dependent claims.

According to a main aspect of the invention, it is characterised by a method of cleaning a particle filter (40), in particular for combustion engines, comprising the steps of adding heat to the inner of the particle filter during a certain time period in
order to burn off the enclosed particles, to add liquid material to the inner of the filter during a certain time period in order to remove the burnt particles from the particle filter, characterised in that the liquid material is first added in one direction through the filter by operating valves (54, 56) provided at both inlet and outlet of the filter via pipe attachments (42, 44) and then added in an opposite direction through the filter by switching the valves (54, 56), and that pressurised air is added in the liquid material that is added into the inner of the filter (40). According to on additional aspect of the invention, it comprises the step of measuring the particle filter, whereby the measurements are compared to the values of a not used filter of the specific type.

According to another aspect of the invention, the liquid material comprises one or some of the types water under high pressure that is blown through the filter for removing particles, water with ultra sound.

According to a further aspect of the invention, the liquid material is water, which water is taken from at least one storage tank.

According to another aspect of the invention, a pump is arranged between the at least one storage tank, which pump is capable of pumping water from the tank through the filter.

According to a further aspect of the invention, at least one collection tank is arranged, which at least collection tank is capable of collecting water that has been pumped through the filter.

According to yet an aspect of the invention, it comprises pumping of water from the collection tank to the storage tank for re-use of the water.

According to yet an aspect of the invention, it comprises cleaning of the collected water before it is brought to the storage tank.

According to a further aspect of the invention, it further comprises a first step of blowing in or sucking out the particle filter for removing loose particles.

According yet a further aspect of the invention, the amount of removed burnt particles are measured and if below a certain predetermined amount, the heating step is terminated.

There are a number of advantages. By the different steps with first burning, then the use of liquid material and subsequent measuring for control of the cleaning, a very cleaning result is obtained which at the same time is quality secured with measurement and comparison with reference values.

The liquid material is preferably water. It has been found that the adding of liquid material after burning of the filter gives a high degree of cleaning. It has also been shown that one can not only add liquid material with high pressure or high velocity without the previous burning step, where otherwise the particle filter risks to be damaged and crack.

Eventually a pre-step may contain a blowing out or sucking out of loose particles in the filter.

These and other aspects of, and advantages with, the present invention will become apparent from the following detailed description of the invention and from the accompanying drawings.

### BRIEF DESCRIPTION OF DRAWINGS

In the following detailed description of the invention, reference will be made to the accompanying drawings, of which
Fig. 1 shows a flow chart of the method according to the invention,
Fig. 2 shows schematically the burning process according to the invention,
Fig. 3 shows schematically an automated burning process,
Figs. 4, 5, show schematically a device for cleaning of a filter according to the invention,
Fig. 6 shows schematically an example of a measuring set-up, and
Fig. 7 shows schematically a test set-up for particle filters for vehicles.

### DETAILED DESCRIPTION OF THE INVENTION

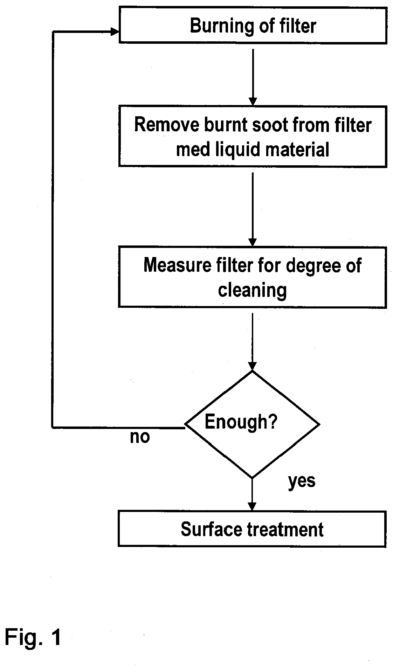

Figure 1 shows a schematic flow chart of the method according to the present invention. The particle filters that are to be cleaned are first inspected for visual defects such as cracks, damaged attachment brackets and the like. Then the filters are cleaned externally. This may for example be done by washing the outer surface with hot water after all holes have been plugged. Possible corrosion or other foreign matter that have not been removed by the water, is removed by blasting. After this pipes and possible contacts and damaged bolts are removed.

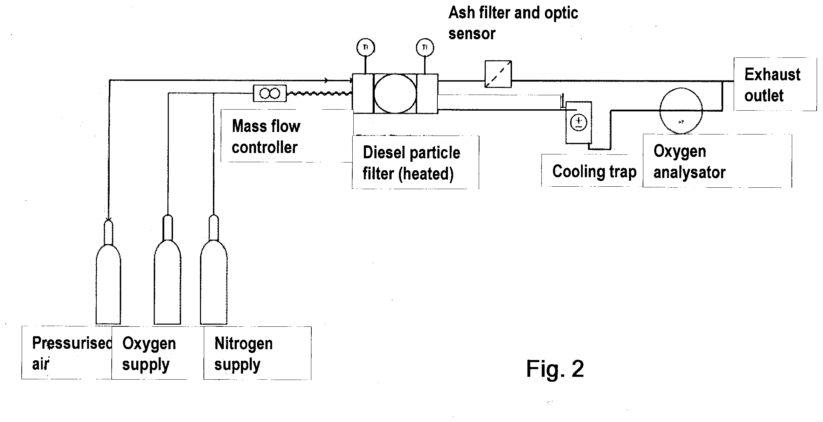

The next step is then to clean the inner of the particle filter. According to the present invention this is performed by burning away the soot and carbon compounds that have been deposited on the filter surfaces. Figure 2 shows an example of a burning step. The particle filter is first preferably arranged with a cover of insulating heat-resistant material and is then connected to a gas source. The O₂ content in the gas is preferably in the are of 2-5%. A control unit for mass flow is arranged in the conduit for the gas inlet in order to control the volume flow and the mixing. Then the gas is preferably pre-heated before it is fed into the particle filter. The particle filter is heated to temperatures above the exothermic reaction of the soot when it is burnt away, but not too high, which thereby avoids the damage of the ceramic filter surfaces. Temperature sensors may be arranged in order to monitor the above mentioned temperatures. During this step the carbon compounds are burnt away from the filter surfaces while the volume flow and O₂-concentration is controlled depending on exhaust and inlet temperatures. The oxidation process can be measured and monitored by an O₂-sensor and temperature control at the front part of the filter and in the flowing gas stream.

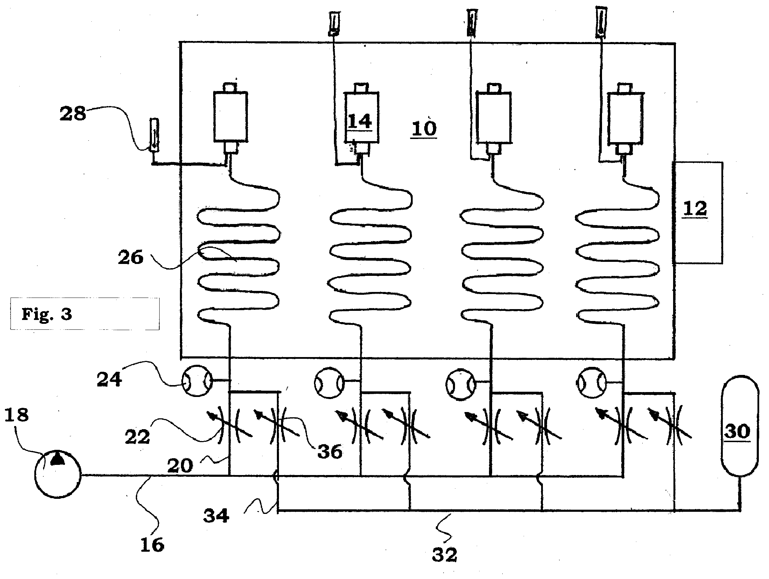

Figure 3 shows a second example of burning step. Here the particle filters 14 that are to be cleaned are placed in an oven. Each particle filter is connected to a pipe loop 26 and a temperature sensor 28 may be placed inside the respective particle filter. After this the oven is heated with a heating unit up to suitable temperature, that may be in the area 450 - 600 °C depending of the filter type. Then control valves 22 for air are opened so that it flows through each branch 20 and each loop 26. The air in the loop will be heated to the same temperature as the oven when it then is brought into the particle filter. The air in the filter provides a burning whereby particles in the filter are burnt away, preferably the air supply in the loop to the filter is low so that the burning is not too fierce so that the temperature is raised too much in the filter, which otherwise could damage the filter. The flow is preferably measured by a flow meter 24 and controlled by the control valve 22. Further the temperature sensor 28 may measure the temperature continuously so that it does not become too high.

The end of the oxidation process may be performed in a few different ways. The most simple is to terminate the heating after a certain time period, which time period is based on empiric studies of certain types of particle filters. Another way is to terminate the heating when the O₂-concentration at the outlet is equal to adjusted inlet concentration.

A third way is to measure the amount of burnt particles during the heating process. In this aspect the particle filter is exposed to impulses with injected air through it with certain time intervals. The air impulses urge the burnt particles to be blown out of the filter. The amount of particles can then be used as a measure of when the burning process can be terminated.

When the filter has been treated during a certain time the particles have been burnt and shall be removed. This may either be done by blowing air into the filter whereby the burnt particles are removed. It shall however be understood that vacuum may be used instead, whereby the burnt away particles are sucked away by a suitable suction means. According to above, the flow of gas through the filter may be regulated in a number of ways in order to obtain an optimal result. Thus it is feasible to increase the flow during the burning process, while maintaining suitable burning temperature, in order to remove burnt particles so that a subsequent blowing or suction process becomes superfluous or at least is reduced.

After this follows the next cleaning step. This is done by adding material into the inner of the filter. It may, as non-limiting examples, be one or several of following materials:
- water under high pressure is blown through the filter in order to remove particles,
- steam under high pressure,
- water under vacuum,
- water with ultra sound,
- ice crystals with high velocity.

These measures remove the remaining soot and particles in the filter that have not been removed during the previous burning step. The filters are thereby attached to a suitable setup with inlet and outlet for the media that is to clean the filter. The inlet is further connected to a source of the media and a pressure increasing or reducing device depending on the type of cleaning method according to above. After this the material is fed into the filter whereby residual particles are removed by the flow of the material. The material may be brought in from one side or from both sides. It is also conceivable to pulse the material when it is brought into the particle filter. further, if water is introduced the also pressurised air may be added in order to increase turbulence in the inner of the filter. If water is used then it may preferably be demineralised in order to avoid limestone deposits and the like.

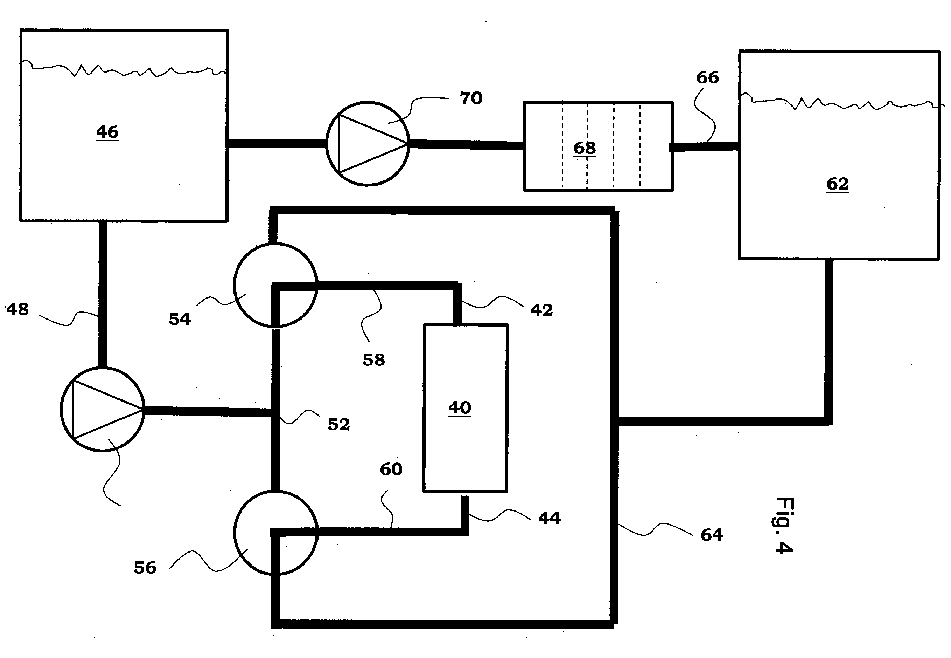

According to a presently preferable embodiment of a cleaning device that is shown in Fig. 4, this comprises an attachment device for a particle filter 40. The attachment device comprises two pipe attachments 42, 44 for inlet and outlet respectively according to below. The cleaning device comprises further at least one tank 46 that contains cleaned water or detergent liquid. A pipe 48 is attached to the tank. The pipe 48 further runs to a pump 50 for creating a pressure increase and in particular a flow increase of the liquid according to below. Downstream the pump a T-joint 52 is connected. Each branch of the T-joint is then connected to a respective switch valve 54, 56 with three inlets-outlets and switching units for connection of two inlets-outlets to the valve, the function of which will be
described below.

An inlet-outlet 58, 60 in each valve is attached to the pipe attachments in the attachment device. The cleaning device further comprises a second tank 62 for polluted water/detergent liquid, which tank is connected to inlets-outlets of the both switching valves via suitable pipe connections 64. Between the two tanks 46, 62 a further pipe connection 68 is arranged, which pipe connection is arranged with a filter device 68 for cleaning of the liquid. Further a second pump 70 may be arranged between the filter 68 and the tank 46 with clean water/detergent liquid.

The cleaning device according to above functions as follows. The tank 46 for clean water/detergent liquid is filled or is full since earlier. The valves 54, 56 are set such that a flow path is created from the tank via the pump and into the particle filter, further out through the particle filter 40 and then to the tank 62 for dirty water/detergent liquid. Then the pump 50 is started whereby larger volumes of liquid are flooded through the particle filter40 whereby dirt, soot and other particles are flushed out from the filter. The dirty water/detergent liquid is collected in the tank 62 for dirty water. When the filter has been flushed in one direction during a certain time the pump 50 is stopped. At the same time or after this the other pump 70 is started, whereby dirty liquid from the other tank 62 is pumped through the filter/cleaning device 68, whereby pollutions are removed before the liquid is again fed into the tank 46 with cleaned liquid.

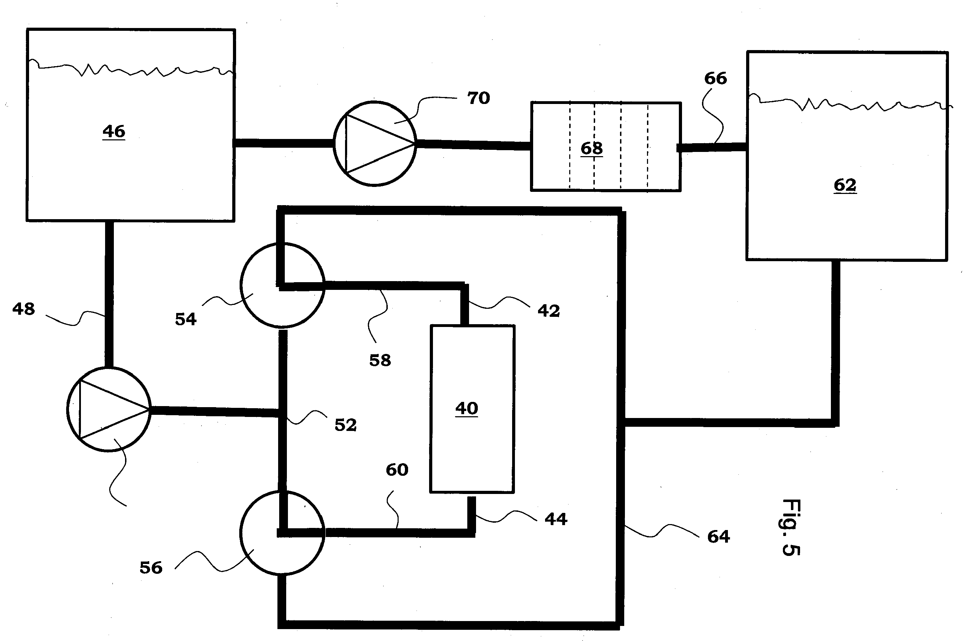

In order to terminate the cleaning of the filter, the valves 54, 56 are switched, Fig. 5, so that the flow direction through the filter becomes the opposite. Then the same flushing of the filter as described above is performed, whereby a complete cleaning of the filter is performed.

It shall be pointed out in this context that several tanks can be used and that the control of the liquid flow through the filter may be done with other types of valves. Further a number of cleaning and filter devices may be used for cleaning of the liquid before it is returned to the first tank, such as filters, cyclones, sedimentation tanks and the like that are available to the person skilled in the art. It is however a great advantage that the liquid is cleaned and recycled because large quantities of liquid are used during the flushing and it would be a great disadvantage if used liquid was not recycled but was fed to the sewage system. Further, pressurised air may be added to the liquid during entry into the particle filter, which further aids in the cleaning.

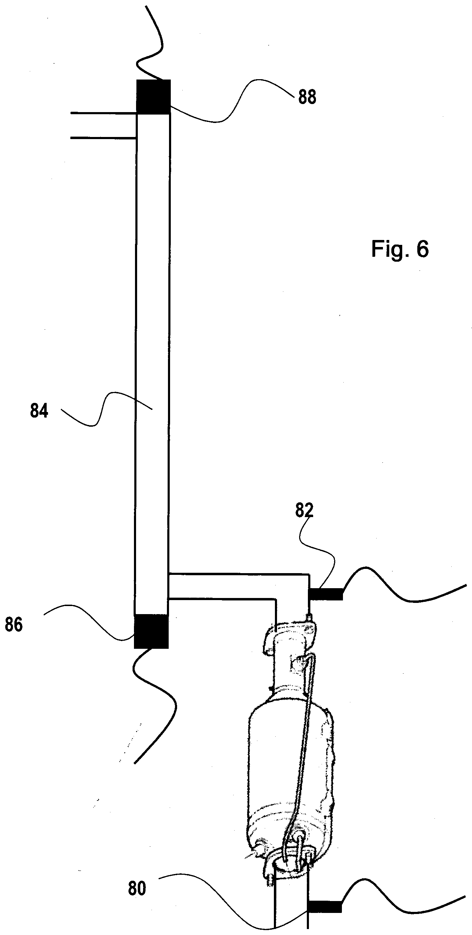

When the cleaning of the filters according to above has been terminated the cleaning result may be measured and evaluated. This may be done according to the invention in a number of ways. Figure 6 shows a schematic setup.

One way is measuring the differential pressure over the particle filter where high values of he difference pressure is an indication of a dirty filter because the filter is clogged with soot and other carbon compounds. The measured differential pressure is compared with the differential pressure of a clean unused filter of the specific type. Pressure sensors 80, 82 are then placed at the inlet and the outlet of the filter and a pressure source (not shown) for applying a pressure to the filter. The pressure sensors are connected to suitable mans for handling the signals from the sensors and for comparing them with predetermined pressure values.

Another way of measuring the result of the heating process is to measure the opacity through the particle filter. The filter is in this state connected to a straight pipe 84. The pipe is in one end arranged with a light transmitter 86, for example a powerful LED, and in the other end arranged with an optical receiver 88. The light transmitter is connected to suitable drive means for driving this and the optical receiver is connected to signal treatment means. Smoke is fed into the particle filter and then into the pipe until a stable concentration of gas is obtained. The opacity is then measured and compared with the values of a clean unused filter. The opacity measurement provides an indication that the filter is cracked which gives high values. A combination of dirty filter that has cracks can give normal values during the differential pressure measurements but will have high values of the opacity measurements.

When a combined filter and catalyst is to be measured, the catalyst has to be ignited and heated in order to have the correct operation conditions.

Other measuring means may include laser scanning and in particular in order to locate cracks and clogged channels in the filter. It is also possible to use optical and/or image processing devices for inspecting the cleaning result inside the filter.

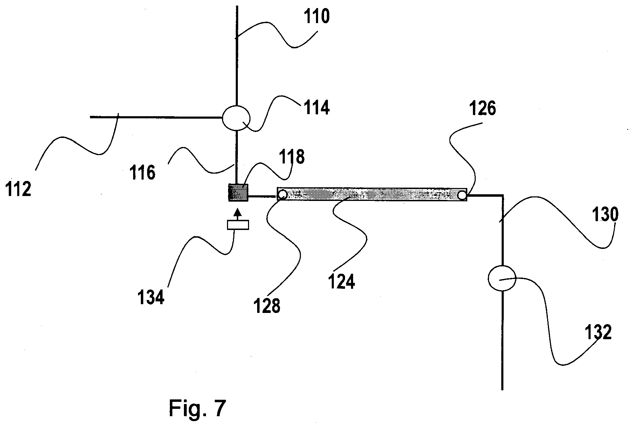

A test unit is shown in Fig. 7, which comprises two inlet pipes 110, 112 connected to a three way valve 114, where one of the inlet pipes 110 are connected to an air source and a fan (not shown) and the other is connected to a smoke generator (not shown). A further pipe 116 is connected to the three way valve. To this pipe the inlet of a particle filter 118 may be disconnectively attached.

The outlet of the filter is connected to a straight pipe 124. The pipe 124 is in one end arranged with a light transmitter 126 for example a strong LED and in the other end arranged with an optical receiver 128. The light transmitter is connected to suitable drive means for driving it and the optical receiver is connected to signal handling means. An outlet pipe 130 is connected to one end of the straight pipe and arranged with a valve 132. A gas meter 134 is further arranged to the particle filter.

A system (which is not part of the claimed invention) for performing the method is intended to function as follows. The three way valve 114 is positioned such that the smoke inlet 110 is connected to the further pipe 116. Smoke that is generated by the smoke generator is fed through the inlet, fills the particle filter 118 and the straight pipe 124. The outlet valve 132 is closed.

The gas meter 134 is activated and measures the gas content such has CO, CO₂, HC and O₂. The gas meter is also capable of controlling if a catalyst is functioning, if the particle filter is combined with a catalyst, which some vehicles have.

The light source 126 is activated and when a stable concentration of gas is obtained the strength of the transmitted light through the straight pipe is measured by the receiver 128 as a measure of the opacity. The measured opacity is then compared to the value of a clean unused filter. The opacity measure gives an indication that the filter is cracked, which gives high values.

When the measurements have been performed the three way valve 114 is positioned such that the air intake 112 is connected to the further pipe and the outlet valve 132 is opened. The system is now cleaned from smoke and is ready for testing of a subsequent filter.

As mentioned above the measured values are compared with earlier measured values and earlier set values of a new filter. If the measured values deviate from the earlier set values with a certain value, this indicates that the cleaning has not been completely successful. In this case the filter is exposed to a second cleaning operation and is measured. This may be repeated until the measured values are within acceptable areas in relation to the earlier set values. It is however to be understood that if a filter is cracked, no further cleaning processes will be made. In this case the filter is either scrapped of the position of the cracks are detected and the cracks are repaired.

When the filter is cleaned it is transferred to a finishing step where the filter is exposed to surface treatment and is given a unique test number for later traceability of the specific filter.

Even if some examples of cleaning and test equipment have been mentioned above it is to be understood that other types of equipment, system and principles can be used for performing the method according to the invention. The embodiments described above and shown in the drawings are thus only to be regarded as non-limiting examples of the present invention and that it may be modified within the scope of the patent claims.

## Claims

1. Method of cleaning a particle filter (40), in particular for combustion engines, comprising the steps of
- adding heat to the inner of the particle filter during a certain time period in order to burn off the enclosed particles,
- to add liquid material to the inner of the filter during a certain time period in order to remove the burnt particles from the particle filter,
**characterised in that** the liquid material is first added in one direction through the filter by operating valves (54, 56) provided at both inlet and outlet of the filter via pipe attachments (42, 44) and then added in an opposite direction through the filter by switching the valves (54, 56), and that pressurised air is added in the liquid material that is added into the inner of the filter (40).

2. Method according to claim 1, whereby it comprises the step of measuring the particle filter, whereby the measurements are compared to the values of a not used filter of the specific type.

3. Method according to claim 1, whereby the liquid material comprises one or some of the types
- water under high pressure that is blown through the filter for removing particles,
- water with ultra sound,.

4. Method according to claim 3, whereby the liquid material is water, which water is taken from at least one storage tank (46).

5. Method according to claim 3, whereby a pump (70) is arranged between the at least one storage tank, which pump is capable of pumping water from the tank through the filter.

6. Method according to any of the claims 3 to 5, whereby at least one collection (62) tank is arranged, which at least collection tank is capable of collecting water that has been pumped through the filter.

7. Method according to claim 6, whereby it comprises pumping of water from the collection tank (62) to the storage tank (46) for re-use of the water.

8. Method according to claim 7, whereby it comprises cleaning of the collected water before it is brought to the storage tank (46).

9. Method according to any of the preceding claims, whereby it further comprises a first step of blowing in or sucking out the particle filter for removing loose particles.

10. Method according to claim 2, whereby the amount of removed burnt particles are measured and if below a certain predetermined amount, the heating step is terminated.

## Patentansprüche

1. Verfahren zum Reinigen eines Partikelfilters (40), insbesondere für Verbrennungsmotoren, die folgenden Schritte umfassend:
- Zuführen von Wärme zum Inneren des Partikelfilters in einem bestimmten Zeitraum, um die enthaltenen Partikel zu verbrennen,
- Hinzufügen eines flüssigen Materials zum Inneren des Filters in einem bestimmten Zeitraum, um die verbrannten Partikel vom Partikelfilter zu entfernen, **dadurch gekennzeichnet, dass** das flüssige Material zunächst in einer Richtung durch den Filter hinzugefügt wird, indem die am Einlass und Auslass des Filters über Rohraufsätze (42, 44) bereitgestellten Ventile (54, 56) bedient werden, und dann durch Umschalten der Ventile (54, 56) in einer entgegengesetzten Richtung durch den Filter hinzugefügt wird, und dass dem flüssigen Material, das dem Inneren des Filters (40) hinzugefügt wird, Druckluft zugeführt wird.

2. Verfahren nach Anspruch 1, den Schritt des Messens des Partikelfilters umfassend, wobei die Messwerte mit den Werten eines unbenutzten Filters des spezifischen Typs verglichen werden.

3. Verfahren nach Anspruch 1, wobei das flüssige Material eine oder mehrere der folgenden Arten umfasst:
- Wasser, das mit Hochdruck durch den Filter geleitet wird, um Partikel zu entfernen,
- Wasser mit Ultraschall.

4. Verfahren nach Anspruch 3, wobei das flüssige Material Wasser ist, wobei das Wasser aus mindestens einem Speichertank (46) entnommen wird.

5. Verfahren nach Anspruch 3, wobei eine Pumpe (70) zwischen dem mindestens einen Speichertank angeordnet ist, wobei die Pumpe Wasser aus dem Tank durch den Filter pumpen kann.

6. Verfahren nach einem der Ansprüche 3 bis 5, wobei mindestens ein Sammeltank (62) bereitgestellt ist, wobei der mindestens eine Sammeltank Wasser sammeln kann, das durch den Filter gepumpt wurde.

7. Verfahren nach Anspruch 6, ferner das Pumpen von Wasser aus dem Sammeltank (62) zum Speichertank (46) zur Wiederverwendung des Wassers umfassend.

8. Verfahren nach Anspruch 7, das Reinigen des gesammelten Wassers, bevor es zum Speichertank (46) geleitet wird, umfassend.

9. Verfahren nach einem der vorstehenden Ansprüche, ferner einen ersten Schritt des Ausblasens oder Absaugens des Partikelfilters zum Entfernen loser Partikel umfassend.

10. Verfahren nach Anspruch 2, wobei die Menge der entfernten, verbrannten Partikel gemessen wird und wenn der Wert unter einem bestimmten festgelegten Wert liegt, wird der Heizschritt beendet.

## Revendications

1. Procédé de nettoyage d'un filtre à particules (40), en particulier pour des moteurs à combustion, comprenant les étapes consistant à
- apporter de la chaleur à l'intérieur du filtre à particules pendant une certaine durée afin d'enlever par combustion les particules renfermées,
- introduire de la matière liquide à l'intérieur du filtre pendant une certaine durée afin d'enlever les particules brûlées du filtre à particules,
**caractérisé en ce que** la matière liquide est d'abord introduite dans une direction à travers le filtre en actionnant des soupapes (54, 56) prévues à la fois à l'entrée et à la sortie du filtre par l'intermédiaire d'attaches de tuyaux (42, 44), puis introduite dans une direction opposée à travers le filtre en commutant les soupapes (54, 56), et **en ce que** de l'air sous pression est ajouté à la matière liquide qui est introduite dans l'intérieur du filtre (40).

2. Procédé selon la revendication 1, comprenant l'étape consistant à mesurer le filtre à particules, les mesures étant comparées aux valeurs d'un filtre non utilisé du type spécifique.

3. Procédé selon la revendication 1, dans lequel la matière liquide comprend un ou plusieurs des types suivants
- de l'eau sous haute pression qui est soufflée à travers le filtre pour éliminer les particules,
- de l'eau avec ultrason.

4. Procédé selon la revendication 3, dans lequel la matière liquide est de l'eau, laquelle eau est prélevée dans au moins un réservoir de stockage (46).

5. Procédé selon la revendication 3, dans lequel une pompe (70) est disposée entre l'au moins un réservoir de stockage, laquelle pompe est capable de pomper l'eau du réservoir à travers le filtre.

6. Procédé selon l'une quelconque des revendications 3 à 5, dans lequel au moins un réservoir de collecte (62) est disposé, ledit au moins un réservoir de collecte étant capable de recueillir l'eau qui a été pompée à travers le filtre.

7. Procédé selon la revendication 6, consistant à pomper de l'eau du réservoir de collecte (62) vers le réservoir de stockage (46) pour réutiliser l'eau.

8. Procédé selon la revendication 7, consistant à nettoyer l'eau collectée avant de l'amener dans le réservoir de stockage (46).

9. Procédé selon l'une quelconque des revendications précédentes, comprenant en outre une première étape de soufflage ou d'aspiration du filtre à particules pour éliminer les particules libres.

10. Procédé selon la revendication 2, dans lequel la quantité de particules brûlées éliminées est mesurée et si elle est inférieure à une certaine quantité prédéterminée, l'étape de chauffage est terminée.
